# EUROPÄISCHE PATENTSCHRIFT

(11) **EP 2 572 786 B1**
(45) Veröffentlichungstag und Bekanntmachung des Hinweises auf die Patenterteilung: **19.04.2017**
(21) Anmeldenummer: 12182676.2
(22) Anmeldetag: 31.08.2012
(51) Int. Cl.: B01L 3/02, G01N 35/10

(54) **Pipetiervorrichtung mit einem Pipetierkopf mit einer Vielzahl von in einem Anordnungsmuster angeordneten Pipetierkanälen**
Pipetting device with pipette head with a number of pipette channels arranged in a pattern
Dispositif de pipetage doté d'une tête de pipetage avec de nombreux canaux de pipetage disposés dans un modèle d'agencement

(30) Priorität: 20.09.2011 DE 102011053808
(43) Veröffentlichungstag der Anmeldung: 27.03.2013
(73) Patentinhaber: CyBio AG, 07745 Jena (DE)
(72) Erfinder: Naumann, Uwe, 07747 Jena (DE); Schöppe, Torsten, 07745 Jena (DE); Oehme, Heiko, 07749 Jena (DE); Moore, Thomas, 07751 Drackendorf (DE)
(74) Vertreter: Schaller, Renate

(56) Entgegenhaltungen:
- EP-A2- 1 070 540
- WO-A1-2011/110141
- DE-U1-202004 007 120
- US-A1- 2005 220 676
- US-A1- 2009 233 816
- US-B2- 6 982 063

## Beschreibung

Die Erfindung betrifft eine Pipetiervorrichtung mit einem Pipetierkopf mit einer ein- oder auch zweidimensionalen Anordnung von Pipetierkanälen und einer Anordnung von mit den Pipetierkanälen in Verbindung stehenden, lösbaren Pipettenspitzen. Die Pipetierkanäle werden jeweils von einem Kolben und einem Zylinder gebildet, wobei jeweils der Kolben in dem Zylinder gegenüber diesem abgedichtet geführt ist. Der Zylinder kann als eine Buchse ausgeführt sein, die aus einem elastischen Material besteht und den Kolben dicht umschließt, womit bereits eine Abdichtung erreicht wird. Um eine matrixförmige Anordnung von Pipettierkanälen zu ermöglichen, sind diese Buchsen entsprechend in Durchgangsbohrungen, z. B. in einer steifen Platte, zueinander angeordnet. Die Zylinder können auch durch die Durchgangsbohrungen einer oder mehrerer übereinander angeordneter Platten gebildet werden. Die Kolbendichtung wird dann in der Regel durch zusätzliche Dichtelemente, wie federunterstützte Ringe, Dichthülsen und/oder O-Ringe bzw. X-Ringe, realisiert.

Die Zylinder, und damit die Pipetierkanäle, sind in einem vorgegebenen Anordnungsmuster zueinander in einer Basisplatte des Pipetierkopfes gefasst. Das Anordnungsmuster entspricht in der Regel einem Raster, gebildet durch die Schnittpunkte von senkrecht aufeinanderstehenden Zeilen und Spalten mit einem gleichen Rasterabstand zwischen den Achsen der Pipetierkanäle, der nach unten durch einen kleinsten sinnvollen Durchmesser der Zylinder und einer Mindestwandstärke zwischen den Zylindern begrenzt ist.

An oder um die Zylinder sind die Pipettenspitzen in einer gleichen Anordnung wie die Pipetierkanäle, in der Regel über eine Dichtung lösbar, angebracht.

Ein derartiger Pipetierkopf und eine derartige Pipetiervorrichtung sind gattungsgemäß aus der EP 1 214 977 B1 bekannt.

Aufgrund der Funktionsweise der Pipetierkanäle werden solche Pipetiervorrichtungen auch als air displacement pipettors, air displacement dispensors oder Luftpolsterpipetten bezeichnet.

Soll nicht die Funktionsweise der Pipetierkanäle, sondern deren Vielzahl ausgedrückt werden, werden solche Pipetiervorrichtungen z. B. als Simultanpipetoren, Multiwellpipetoren, Multichannel Dispenser, Mehrkanaldosiervorrichtungen, Mehrkanalpipetten oder Mehrkanaldispenser bezeichnet.

Üblicherweise sind derartige Vorrichtungen bzgl. des Anordnungsmusters und damit der Abstände und der Anzahl der Pipetierkanäle am sogenannten Mikrotitrationsplattenraster orientiert ausgeführt. Übliche Mikrotitrationsplattenraster haben zwischen den Achsen der Pipetierkanäle Rasterabstände von 9 mm, 4,5 mm oder 2,25 mm und eine Anzahl von (1), 4, 8, 12, 16, (24, 32, 48) 96, 384 und im Extremfall sogar 1536 Pipetierkanälen.

Aus dem Stand der Technik bekannte Vorrichtungen unterscheiden sich des Weiteren durch die Art der Befestigung und Abdichtung der Pipettenspitzen an den Pipetierkanälen.

Zum einen sind Vorrichtungen in völliger Analogie zu den Handpipetten, wie z. B. in der DE 4 104 831 A1 offenbart, bekannt, mit sogenannten Aufnahmekonen bzw. Aufnahmeschäften (zylindrisch oder anderweitig ausgeformt) vorgesehen, auf denen die Pipetierspitzen aufgezogen und oft auch über einen sogenannten O-Ring abgedichtet werden. Eine derartige Vorrichtung ist in der DD 260 571 beschrieben.

Zum anderen gibt es Vorrichtungen, wie z. B. aus der DE 20 2008 013 533 U bekannt, bei denen die Pipettenspitzen in Magazinen hängend mit ihren stirnseitigen Dichtflächen gemeinsam an eine mit Löchern versehne, flächig ausgeführte, elastische Dichtmatte gepresst werden. Dieses Prinzip der Verbindung zwischen den Pipetierkanälen und den Pipettenspitzen wird in der CyBi-well Produktfamilie der Anmelderin seit vielen Jahren vergegenständlicht. Pipetiervorrichtungen die verschiedene Möglichkeiten zur Aufnahme der Magazine offenbaren, sind z. B. aus der DE 20 2007 000 904 U und der DE 20 2011 000 837 (noch unveröffentlicht).

Die nachfolgend zu beschreibende Erfindung ist auf alle die oben genannten Pipetiervorrichtungen, die über wechselbare Pipettenspitzen (hier genauso bezeichnet) oder vergleichbar anwendbare Röhrchen (Kanülen) oder ähnliches verfügen, anwendbar. Dabei ist es unerheblich ob die Pipettenspitzen sogenannte Einmalartikel (Kunststoff-Spritzguss Disposable) oder aber Metall-, Glas- oder Keramikartikel sowie wiederum Kunststoffartikel zur mehrmaligen Verwendung sind. Ebenfalls ist es unerheblich, ob es sich um eine elektromechanische Pipertiervorrichtung oder eine mechanische Pipetiervorrichtung handelt.

Bei der praktischen Anwendung von Handpipetten steht der Anwender tagtäglich vor der Situation die für die jeweilige Anwendung geeignete Pipette zumeist bzgl. des zu hantierenden Volumenbereichs auszuwählen. In vielen Laboren sind Pipettenständer zu finden, die eine Auswahl an verschiedenen Handpipetten bereithalten.

Je mehr Kanäle eine solche Handpipette hat, umso mehr Geschick wird dem Anwender abverlangt und Pipetten mit 96 oder mehr Kanälen sind bislang nur als Standgeräte sinnvoll einsetzbar.

Standgeräte sind wesentlich teurer als Handpipetten und benötigen darüber hinaus erheblich viel Platz auf der Laborbank.

Der Anwender im Labor steht somit sehr oft vor der Frage, welche Pipetiervorrichtung mit welchem pipetierbaren Volumenbereich für ihn das richtige ist. Oft geht diese Abwägung mit dem Kauf von mehreren Vorrichtungen und damit hohen Investitionen einher.

Ein Ausweg sind Systeme mit sogenannten Wechselköpfen, d. h. der Anwender kauft ein Grundgerät und austauschbare Pipetierköpfe.

Diese Geräte sind für viele Anwender optimal, da sie schnell und einfach umrüstbar sind. Ein Beispiel hierfür ist das von der Anmelderin angebotene System "CyBi-well vario", welches u. a. in der DE 20 2007 000 904 U beschrieben ist. Allerdings sind derartige Geräte wegen der erforderlichen mechanischen Präzision und Zuverlässigkeit aufwändig konstruiert, schwer und immer noch preisintensiv.

Darüber hinaus ist es insbesondere bei automatisch abzuarbeitenden Pipetierprotokollen lästig und unproduktiv Liquid Handling Abläufe unterbrechen zu müssen, um zwecks Transfer von anderen Volumina die Pipetierköpfe auszutauschen.

Um den mit einer Pipetiervorrichtung handhabbaren Volumenbereich, das heißt dem Bereich zwischen einem kleinsten und einem größten pipetierbaren Volumen pro Pipettenspitze, ohne Austausch des Pipetierkopfes zu erweitern, wurden im Stand der Technik verschiedene Vorschläge unterbreitet.

Mit der DE 41 04 831 A1 ist ein Pipetierkanal (hier Dosiervorrichtung) für manuelle und motorisch betriebene Ein- und Mehrkanaldosiervorrichtungen offenbart, der im Unterschied zu üblichen Pipetierkanälen einen inneren Kolben aufweist, welcher innerhalb eines äußeren Kolbens geführt ist, um über den Kolbenhub des äußeren Kolben ein großes Volumen in die Pipettenspitze aufzunehmen und über den Kolbenhub des inneren Kolbens ein kleines Volumen, wesentlich feinfühliger aufnehmen zu können. Diese bereits seit fast 20 Jahren bekannte Lösung bedarf eines hohen technologischen Aufwandes und hat sich bis heute in der Praxis nicht durchgesetzt.

Die DE 600 13 983 T2 offenbart eine spezielle Pipettenspitze in die mehr als nur ein Pipetierkanal mündet. Dabei kann die Spitze je nach Form und Dimensionierung des Spitzenbundes (hier Krone) eine unterschiedliche Anzahl von Pipetierkanälen bzw. deren Öffnungen umschließen. Der Nachteil derartiger Pipettenspitzen liegt darin, dass diese speziell ausgeführt werden müssen, was wiederum speziell geformte und dimensionierte Dichtungen erfordert sowie speziell hierfür geeignete Magazine mit denen die Pipettenspitzen an den Pipetierkopf angelegt werden.

In der EP 1 214 977 B1 ist eine Mehrkanal-Pipetiervorrichtung gezeigt, die eine Anzahl von Pipetierkanälen umfasst, die über eine Adapterplatte so mit Pipettenspitzen verbunden sind, dass jeder Pipettenspitze wenigstens zwei Pipetierkanäle zugeordnet sind. Die Adapterplatte weist auf einer Seite, gleich dem Anordnungsmuster der Pipetierkanäle, ein Muster von Kanaleingängen dünnerer Kanäle auf, die gruppenweise im Adapterinneren zu dickeren Kanälen zusammengeführt werden, deren Auslässe das Anordnungsmuster der Pipettenspitzen bestimmt und einem Mikrotitrationsplattenraster entspricht. Der Nachteil besteht hier insbesondere darin, dass eine Pipetiervorrichtung mit beispielsweise 96 Pipetierkanälen, bei der über den Adapter z. B. jeweils vier Pipetierkanäle in eine Pipettenspitze zusammengeführt werden, nur über 24 Pipettenspitzen pipetiert werden kann. Das heißt, je größer das zu handhabende Volumina pro Pipettenspitze ist, desto geringer wird die Anzahl der pipetierbaren Volumina. Die Vergrößerung des pipetierbaren Volumens erfolgt, ebenso wie gemäß der DE 600 13 983 T2, linear in Abhängigkeit von der Anzahl der miteinander verbundenen Pipetierkanäle, was im erläuterten Beispiel beim Verbinden von 4 Pipetierkanälen lediglich einer Vervierfachung entspricht.

Es ist die Aufgabe der Erfindung, eine Pipetiervorrichtung mit einem Pipetierkopf zu finden, die es ermöglicht die mögliche Volumenaufnahme und -abgabe der einzelnen Pipettenspitzen über einen größeren Volumenbereich an jeweils gestellte Anforderungen anzupassen.

Die Aufgabe wird mit einer Pipetiervorrichtung gemäß dem Anspruch 1 gelöst. Dabei können die beiden Anordnungsmuster im Pipetierkopf gleich oder unterschiedlich und zueinander versetzt oder nebeneinander ausgebildet sein.

Es können genau zwei Gruppen von Pipetierkanälen vorhanden sein, nämlich eine Gruppe von größeren Pipetierkanälen mit einem größeren Durchmesser, und eine Gruppe von kleineren Pipetierkanälen, mit einem kleineren Durchmesser, wobei die beiden Anordnungsmuster jeweils einem gleichen Raster einer standardisierten Mikrotiterplatte entsprechen und zueinander versetzt angeordnet sind.

Um die größeren Pipetierkanäle wesentlich größer ausführen zu können, kann die Gruppe von kleineren Pipetierkanälen ein Anordnungsmuster aufweisen, welches nur einem Teil eines Rasters einer standardisierten Mikrotiterplatte entspricht, womit daneben eine große Fläche für das Anordnungsmuster der größeren Pipetierkanäle verbleibt.

Das Anordnungsmuster der Gruppe von kleineren Pipetierkanälen kann gleich einer Anordnung von marginalen Wells der Mikrotiterplatte in L-Form sein.

Das Anordnungsmuster der Gruppe von größeren Pipetierkanälen kann so gebildet sein, indem die Pipetierkanäle in wenigstens zwei Zeilen und Spalten zueinander versetzt angeordnet sind.

Die Abdichtung der Pipettenspitzen gegenüber den Pipetierkanälen kann durch eine am Pipetierkopf anliegende Dichtplatte gelöst sein, die ein Muster von Löchern aufweist, welches beide Anordnungsmuster umfasst.

Bei der Pipetiervorrichtung kann ein wenigstens teilweise befülltes erstes Magazin für kleinere Pipettenspitzen oder ein wenigstens teilweise befülltes zweites Magazin für größere Pipettenspitzen kraftschlüssig am Pipetierkopf angelegt sein, wobei sich die Magazine im Durchmesser der Löcher sowie der Lage der Lochmuster zu den Außenkanten der Magazine unterscheiden.

Es ist erfindungswesentlich, dass die Pipetiervorrichtung eine Adapterplatte aufweist, die eine gleiche Anzahl von Kanälen wie die kleineren oder die größeren Pipetierkanäle umfasst, wobei die Kanaleinlässe in einem Muster gleich dem Anordnungsmuster der jeweiligen Pipetierkanäle diesen gegenüber angeordnet sind und ein durch die Kanalauslässe gebildetes Muster gleich einem Raster oder einem Teil eines Rasters einer standardisierten Mikrotiterplatte entspricht, womit insbesondere Anordnungsmuster einer Gruppe von großen Pipetierkanälen an die Raster von standardisierten Mikrotiterplatten, auch mit sehr kleinen Rasterabständen, adaptiert werden können.

Die Erfindung soll nachfolgend anhand von Ausführungsbeispielen erläutert werden, zu denen nachfolgende Zeichnung wie folgt zeigt:
Fig. 1 ein Mehrkanalpipetiersystem mit einer Mehrkanalpipetiervorrichtung und Zubehör
Fig. 2A einen Pipetierkopf gemäß einem nicht unter Schutz stehenden ersten Ausführungsbeispiel
Fig. 2B ein erstes Ausführungsbeispiel einer Pipetiervorrichtung mit einem Pipetierkopf gemäß Fig. 2A und einem ersten Magazin 40.1, bestückt mit kleineren Pipettenspitzen 30.1
Fig. 2C ein zweites Ausführungsbeispiel einer Pipetiervorrichtung mit einem Pipetierkopf gemäß Fig. 2A und einem zweiten Magazin 40.2, bestückt mit größeren Pipettenspitzen 30.2
Fig. 3A einen Pipetierkopf gemäß einem erfindungsgemäßen zweiten Ausführungsbeispiel
Fig. 3B-3C ein erstes Ausführungsbeispiel einer Pipetiervorrichtung mit einem Pipetierkopf gemäß Fig. 3A und einer ersten Adapterplatte 50.1, bestückt mit kleineren Pipettenspitzen 30.1
Fig. 3D-3H ein zweites Ausführungsbeispiel einer Pipetiervorrichtung mit einem Pipetierkopf gemäß Fig. 3A und einer zweiten Adapterplatte 50.2, vorgesehen für größere Pipettenspitzen 30.2

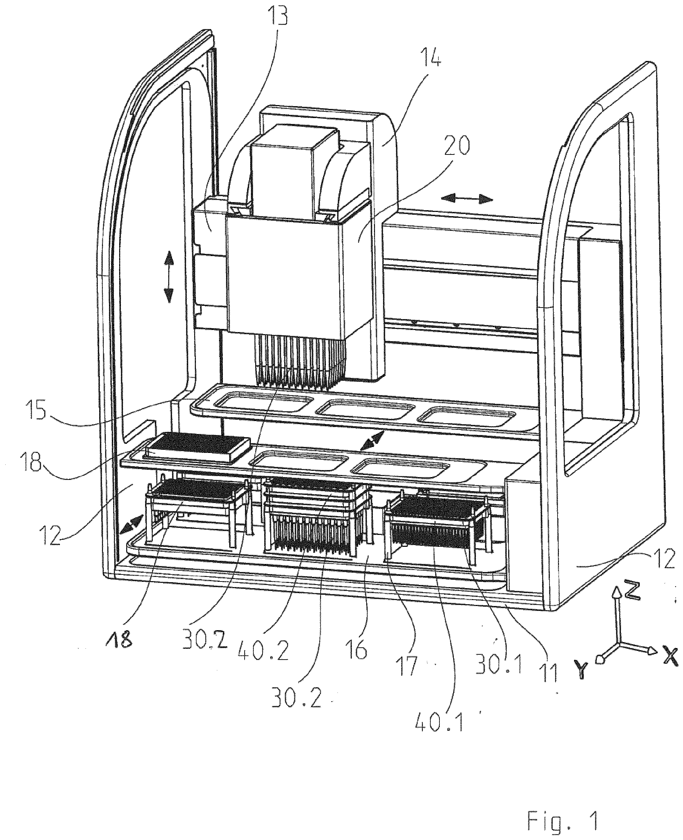

In **Fig.1** ist ein Mehrkanalpipetiersystem schematisch dargestellt in welchem eine erfindungsgemäße Pipetiervorrichtung vorteilhaft Anwendung finden kann.

Das gesamte Mehrkanalpipetiersystem ist in einem Gehäuse, von welchem hier nur die Basisblatte 11 und zwei Seitenwände 12 dargestellt sind, untergebracht. Zwischen den Seitenwänden 12 ist unmittelbar vor einer nicht dargestellten Rückwand, parallel zur Basisplatte 11 verlaufend, eine erste Führungsschiene 13 befestigt, an welcher in x-Richtung verfahrbar eine zweite Führungsschiene 14 angebracht ist, an der ein Pipetierkopf 20 in z-Richtung verfahrbar montiert ist. An dem hier dargestellten Pipetierkopf 20, der Gegenstand der Erfindung ist und der anhand der nachfolgenden Zeichnung näher erläutert werden wird, sind beispielhaft zweite Pipetierspitzen 30.2 angebracht und er befindet sich in einer oberen Position an der zweiten Führungsschiene 14.

Unterhalb der zweiten Führungsschiene 14 sind parallel zur Basisplatte 11 in einer oberen Ebene zwei obere Transportwagen 15 mit rechteckigförmigen Öffnungen und in einer unteren Ebene ein unterer Transportwagen 16 mit einer geschlossenen Aufstellfläche in y-Richtung verfahrbar montiert. Auf dem unteren Transportwagen 16 können z. B., wie hier an drei Aufstellplätzen gezeigt, auf dafür vorgesehenen Haltern 17, Mikrotiterplatten 18, Adapterplatten 50.1, 50.2 sowie mit Pipettenspitzen 30.1, 30.2 bestückte oder leere Magazine 40.1, 40.2 einzeln oder gestapelt stehen. In der Darstellung sind vom Betrachter aus am linken Aufstellplatz eine Mikrotiterplatte 18, am mittleren Aufstellplatz zweite Magazine 40.2 bestückt mit größeren Pipettenspitzen 30.2 und am rechten Aufstellplatz erste Magazine 40.1 bestückt mit kleineren Pipettenspitzen 30.1 in den Haltern 17 abgelegt, dargestellt.

Auf einer der oberen Transportwagen 15 ist über einem der rechteckförmigen Öffnungen eine Mikrotiterplatte 18 abgelegt.

Aufgrund der translatorischen Freiheitsgrade des gesamten Multipipetiersystems können der Pipetierkopf 20 und die Aufstellplätze, beziehungsweise die rechteckförmigen Öffnungen, so einander zugestellt werden, dass die Pipettenspitzen, je nachdem, ob sie mittelbar über eine Adapterplatte in einem Magazin hängend oder unmittelbar in einem Magazin hängend kraftschlüssig über eine Dichtplatte bzw. mehrere Dichtringe am Pipetierkopf 20 gehalten werden können oder aber die Pipettenspitzen form- und kraftschlüssig an dafür vorgesehenen Konen am Pipetierkopf 20 befestigt werden, vom Pipetierkopf 20 aufgenommen werden und der Pipetierkopf 20 über auf den oberen Transportwagen 15 liegende Mikrotiterplatten 18 gefahren werden kann, um einen Pipetiervorgang auszuführen.

Die Bestückung der Transportwagen 15, 16 kann durch Handlingroboter, die durch in dafür vorgesehene Öffnungen der Seitenwände greifen, oder manuell erfolgen.

Innerhalb eines solchen Mehrkanalpipetiersystems kommen die Vorzüge eines erfindungsgemäßen Pipetierkopfes 20 besonders gut zur Geltung, da er schnell und automatisch mit verschiedenen Magazinen 40.1, 40.2 für Pipettenspitzen 30.1, 30.2 unterschiedlichen Durchmessers sowie gegebenenfalls einer Adapterplatte 50.1, 50.2 zu unterschiedlich ausgeführten Pipetiervorrichtungen kombinierbar ist, um für unterschiedliche Volumenbereiche optimiert zu werden.

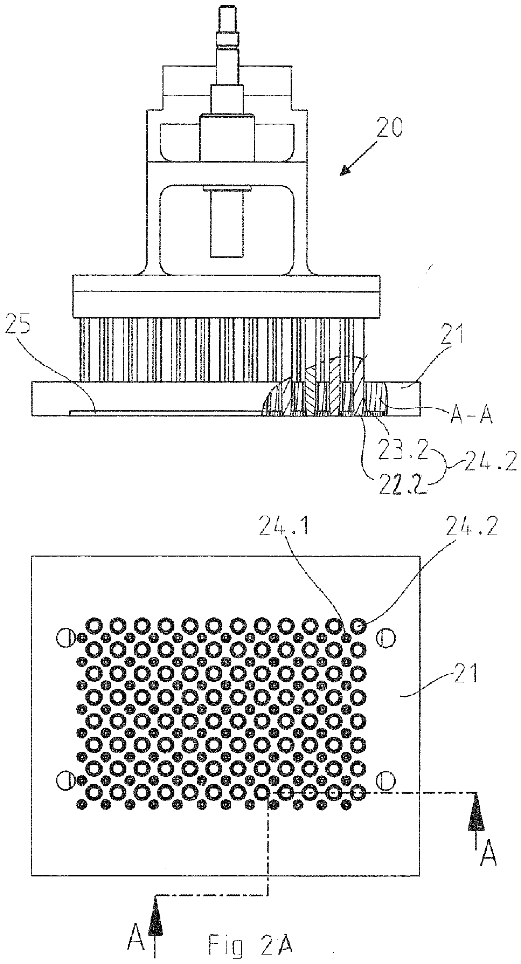

In den **Figuren 2A** bis **2C** ist ein Pipetierkopf 20 gemäß einem ersten Ausführungsbeispiel sowie zwei Ausführungsbeispiele einer Pipetiervorrichtung umfassend einen solchen Pipetierkopf 20 und ein Magazin 40.1, 40.2, bestückt mit Pipettenspitzen 30.1, 30.2 gezeigt.

Im Unterschied zum Stand der Technik, wonach Pipetierköpfe eine zweidimensionale regelmäßige Anordnung von Pipetierkanälen, d. h. in einem Raster angeordnete Pipetierkanäle gleichen Durchmessers umfassen, haben erfindungsgemäße Pipetierköpfe 20 gemeinsam, dass sie wenigstens zwei Gruppen von Pipetierkanälen 24.1, 24.2 unterschiedlicher Größe, das heißt unterschiedlichen Durchmessers aufweisen. Diese sind jeweils in einem Anordnungsmuster, welches nicht zwingend einem Raster entspricht, angeordnet.

Unter einem Raster ist, wie einleitend erläutert, ein Anordnungsmuster zu verstehen, welches durch die Schnittpunkte von senkrecht aufeinanderstehenden Zeilen und Spalten mit einem gleichen Rasterabstand zwischen den Schnittpunkten gebildet ist. Werden Pipetierkanäle in einem Anordnungsmuster gleich einem Raster angeordnet, so verlaufen die Achsen der Pipetierkanäle durch diese Schnittpunkte. Ist das Raster der Pipetierkanäle an das einer standardisierten Mikrotiterplatte angepasst, dann sind die Achsabstände so gewählt, dass sie den Abständen der Mittelpunkte der Vertiefungen (Wells) von standardisierten Mikrotiterplatten entsprechen. Die Raster sollen als identisch gelten, wenn die Pipetierkanäle und Vertiefungen eineindeutig einander zugeordnet sind, das heißt, jeder Vertiefung ist ein Pipetierkanal und jedem Pipetierkanal ist eine Vertiefung zugeordnet. Wenn zwar jedem Pipetierkanal eine Vertiefung, jedoch nicht jeder Vertiefung ein Pipetierkanal zugeordnet ist, dann entspricht das Raster der Pipetierkanäle einem Teil des Rasters der Mitrotiterplatte.

Wie nachfolgend erläutert wird, können die Anordnungsmuster der wenigstens zwei Gruppen von unterschiedlich großen Pipetierkanälen jeweils sowohl einem Raster oder einem Teil eines Rasters einer standardisierten Mikrotiterplatte entsprechen aber auch hiervon abweichen.

Gemäß des ersten Ausführungsbeispiels sind in einem Pipetierkopf 20 zwei Gruppen von Pipetierkanälen 24.1, 24.2 vorhanden, eine Gruppe von größeren Pipetierkanälen 24.2 und eine Gruppe von kleineren Pipetierkanälen 24.1. Die größeren Pipetierkanäle 24.2 weisen Kolben 22.2 mit einem größeren Durchmesser und folglich Zylinder 23.2 mit einem größeren Durchmesser im Vergleich zu den kleineren Pipetierkanälen 24.1 auf. Abgesehen von diesem Unterschied, dass wenigstens zwei Gruppen von unterschiedlich großen Pipetierkanälen 24.1, 24.2 vorhanden sind, kann ein erfindungsgemäßer Pipetierkopf 20 gleich solchen aus dem Stand der Technik bekannten, aufgebaut sein.

Je größer der Durchmesserunterschied zwischen den Pipetierkanälen 24.1, 24.2 der beiden Gruppen ist, desto größer wird der vom Quadrat des halben Durchmessers abhängige Volumenbereich, an den ein damit ausgeführter Pipetierkopf 20 sowie eine damit ausgestattete Pipetiervorrichtung anpassbar sind.

Die beiden Gruppen von Pipetierkanälen 24.1, 24.2 sind gemäß dem ersten Ausführungsbeispiel jeweils in einem Anordnungsmuster gleich einem Raster angeordnet. Beide Raster entsprechen genau dem Raster einer standardisierten 96er Mikrotiterplatte 18, dass heißt es sind 8 x 12 Pipetierkanäle 24.1 und 8 x 12 Pipetierkanäle 24.2 mit jeweils einem Abstand von 9 mm zueinander angeordnet. Wie aus der unteren Darstellung in **Fig. 2A****,** Ansicht des Pipetierkopfes 20 von unten ohne Dichtplatte 25, zu erkennen ist, sind dabei die kleineren Pipetierkanäle 24.1 jeweils in der Mitte zwischen vier benachbarten größeren Pipetierkanälen 24.2 angeordnet. Demnach sind die beiden Gruppen zueinander versetzt in gleichen Rastern angeordnet. Die kleineren Pipetierkanäle 24.1 haben vorteilhaft einen möglichst kleinen Durchmesser von z. B. 1,5 mm, während die größeren Pipetierkanäle 24.2, durch den Rasterabstand und die Zwischenordnung der kleineren Pipetierkanäle 24.1 beschränkt, einen Durchmesser von z. B. 4,5 mm aufweisen können. Die mögliche Volumenaufnahme der größeren Pipetierkanäle 24.2 liegt damit bei knapp dem 10-fachen von dem der kleineren Pipetierkanäle 24.1.

Die insgesamt 192 Pipetierkanäle 24.1, 24.2 bestehen, gleich dem Stand der Technik, jeweils aus einem Kolben 22.1, 22.2 der in einem Zylinder 23.1, 23.2 geführt ist, wobei die Zylinder 23.1, 23.1 in einer Trägerplatte 21 des Pipetierkopfes 20 ausgebildet sind. Die Kolben 22.1, 22.2 werden in konventioneller Weise über einen gemeinsamen Spindelantrieb bewegt. Unterhalb der Trägerplatte 21 ist eine Dichtplatte 25 mit 192 Löchern angebracht, wobei das Muster der Löcher der Überlagerung beider Raster mit den entsprechenden Durchmessern entspricht. Eine am Pipetierkopf 20 vorgesehene, in der Zeichnung nicht dargestellte Andruckeinrichtung, kann je nachdem, ob über die kleineren oder die größeren Pipetierkanäle 24.1, 24.2 pipetiert werden soll, mit zwei verschiedenen Magazinen 40.1, 40.2 verbunden werden, die entweder mit kleineren Pipettenspitzen 30.1, das heißt Pipettenspitzen mit einem kleinerem Aufnahmevolumen, insbesondere kleiner/gleich 60 ml oder größeren Pipettenspitzen 30.2, das heißt Pipettenspitzen mit einem größeren Aufnahmevolumen, insbesondere größer /gleich 200 ml bestückt sind. Die Magazine 40.1, 40.2 unterscheiden sich entsprechend im Durchmesser der Löcher und in der Lage des Lochmusters, welches ebenfalls dem Raster einer 96er Mikrotiterplatte 18 entspricht, zu den Außenkanten des Magazins 40.1, 40.2.

Damit die Andruckeinrichtung wie herkömmlich für in ihren äußeren Abmaßen gleiche Magazine 40.1, 40.2 ausgelegt werden kann, können entweder beide Magazine 40.1, 40.2 so ausgeführt sein, dass deren Rastermittelpunkt zum Mittelpunkt des Magazins 40.1, 40.2 in entgegengesetzter Richtung versetzt ist oder bei einem der Magazine 40.1, 40.2 liegt der Rastermittelpunkt im Mittelpunkt des Magazins 40.1, 40.2 und nur der Rastermittelpunkt des andern Magazins 40.1, 40.2 ist versetzt.

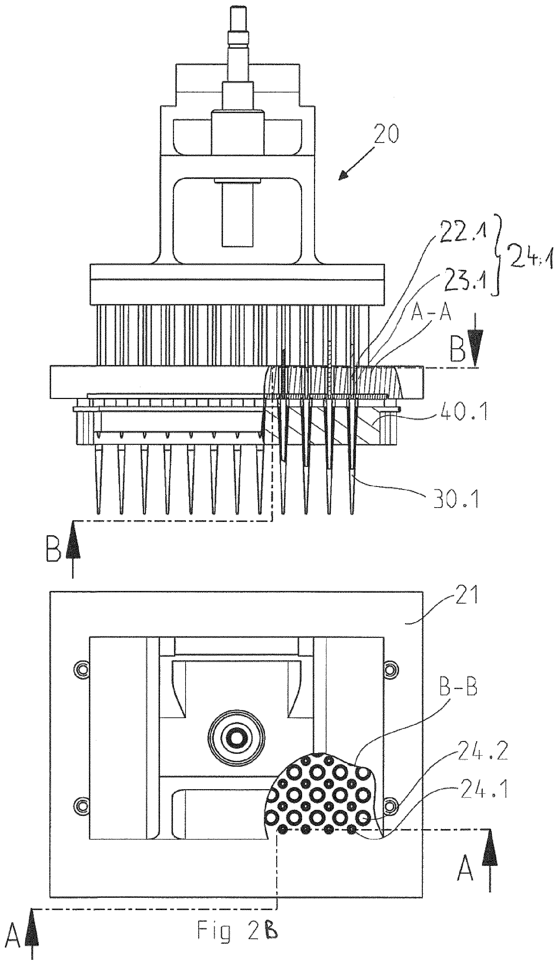

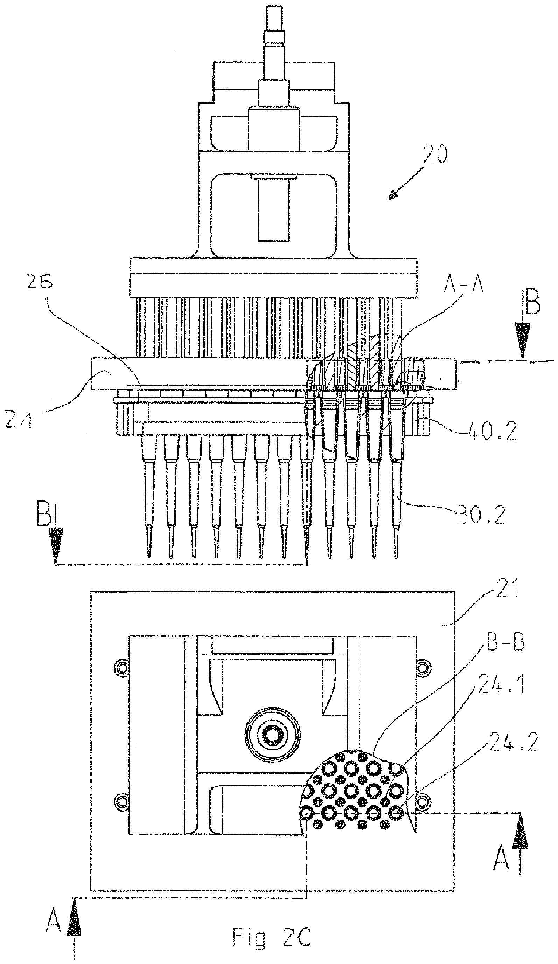

Wird, wie in **Fig. 2B** gezeigt, das Magazin 40.1 mit den kleineren Pipettenspitzen 30.1 am Pipetierkopf 20 angebracht, dann sind die kleineren Pipettenspitzen 30.1 mit den kleineren Pipetierkanälen 24.1 verbunden. Analog werden, wie in **Fig. 2C** dargestellt, die größeren Pipettenspitzen 30.2 mit den größeren Pipetierkanälen 24.2 verbunden. Dadurch ist es möglich einen Volumenbereich von wenigstens von 100 nl bis 250 µl zu hantieren.

Die Verbindung der Pipettenspitzen 30.1, 30.2 muss nicht wie beschrieben über ein kraftschlüssiges Halten an eine Dichtplatte 25 erfolgen, sondern kann insbesondere bei einer geringeren Anzahl von Pipetierkanälen 24.1, 24.2 auch, wie aus dem Stand der Technik als alternative Verbindung bekannt, erfolgen, indem an den Zylindern 23.1, 23.2 Konen ausgebildet sind, auf die unmittelbar oder mittelbar über einen O-Ring die Pipettenspitzen aufgezogen werden können.

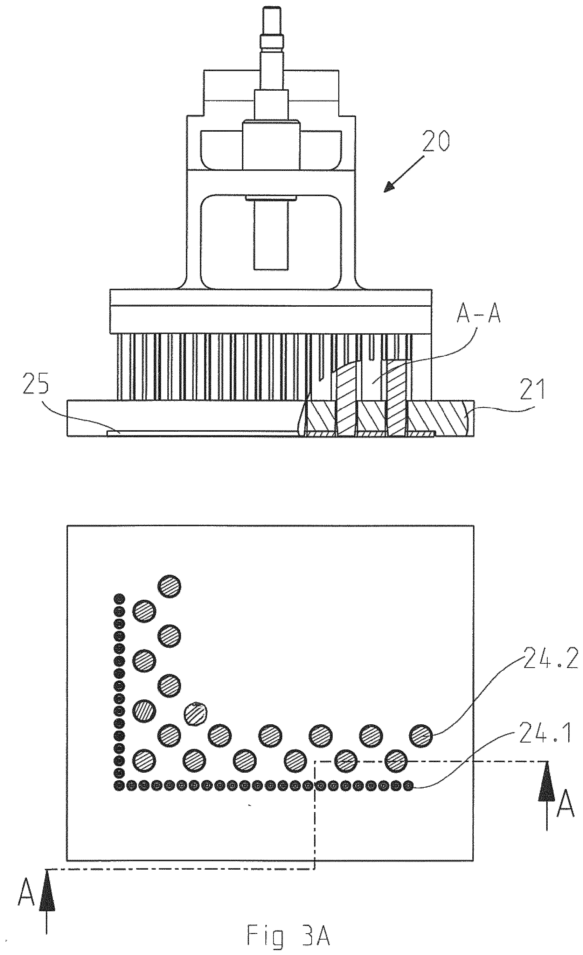

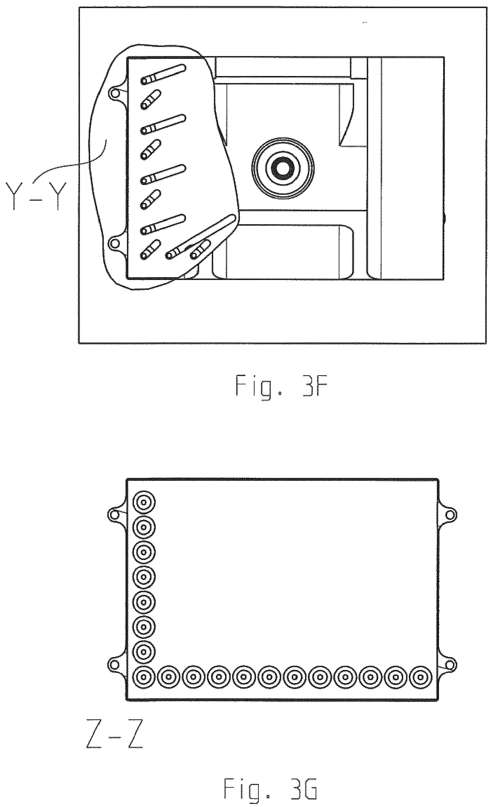

In den **Fig. 3A** bis **3H** sind ein Pipetierkopf 20 gemäß einem zweiten Ausführungsbeispiel sowie Ausführungsbeispiele einer Pipetiervorrichtung umfassend einen solchen Pipetierkopf 20 und Adapterplatten 50.1, 50.2, bestückt mit Pipettenspitzen 30.1, 30.2 gezeigt.

Gleich dem vorher beschriebenen Ausführungsbeispiel weist der Pipetierkopf 20 zwei Gruppen von Pipetierkanälen 24.1, 24.2 auf, eine Gruppe von größeren Pipetierkanälen 24.2 und eine Gruppe von kleineren Pipetierkanälen 24.1. Im Unterschied zum zuvor beschriebenen Ausführungsbeispiel sind diese beiden Gruppen unterschiedliche Anordnungsmuster die nebeneinander ausgebildet sind.

Das der Gruppe von kleineren Pipetierkanälen 24.1 entspricht einem Teil eines Rasters einer standardisierten Mikrotiterplatte 18, hier einer 384er Mikrotiterplatte mit einem Rasterabstand von 2,25 mm. Das Anordnungsmuster der Gruppe von größeren Pipetierkanälen 24.2 entspricht weder einem Raster, noch einem Teil eines Rasters einer standardisierten Mikrotiterplatte 18.

Um die größeren Pipetierkanäle 24.2 mit einem noch größeren Durchmesser ausführen zu können, als wie sie bei einer Nebeneinanderordnung mit einem Rasterabstand der Mikrotiterplatten 18 begrenzt sind, werden sie in zwei Zeilen und Spalten zueinander versetzt angeordnet. Die größeren Pipetierkanäle 24.2 könnten auch abweichend von dem gezeigten Anordnungsmuster verteilt in der Trägerplatte 21 angeordnet sein, z. B. auf Kreisbögen oder auch scheinbar willkürlich. Entscheidend ist, wie nachfolgend gezeigt wird, dass innerhalb einer Adapterplatte 50.2 nicht zusammentreffende Kanäle geführt sind, die das jeweilige Anordnungsmuster auf einen Teil eines Rasters einer standardisierten Mirkrotiterplatte anpasst.

Die beschriebene Kombination von Anordnungsmustern, gezeigt in Fig. 3A ist insbesondere dann von Vorteil, wenn der Durchmesser der kleineren Pipetierkanäle 24.1 sehr klein und der Durchmesser der größeren Pipetierkanäle 24.2 sehr groß ist. Dadurch ist es möglich einen Volumenbereich von wenigstens von 100 nl bis 1000 µl zu hantieren.

Gemäß diesem zweiten Ausführungsbeispiel für einen Pipetierkopf 20 sind 39 der kleineren Pipetierkanäle 24.1 im Abstand von 4.5 mm (pitch) L-förmig, also in einer Zeile und einer Spalte, so angeordnet, dass sie gleich den marginalen Wells einer 384er Mikrotiterplatte angeordnet sind. Das Anordnungsmuster dieser Gruppe ist daher gleich einem Teil des Rasters einer 384er Mikrotiterplatte 18. Innerhalb der durch die beiden Schenkel des "L"s aufgespannten Fläche sind, wie bereits beschrieben, 19 der größeren Pipetierkanäle 24.2 angeordnet. Wie üblich verfügen alle diese Pipetierkanäle 24.1, 24.2 über stirnseitig flächige Elastomerdichtungen, welche wiederum, wie anhand des ersten Ausführungsbeispiels für einen Pipetierkopf 20 erläutert, am einfachsten als eine Dichtplatte 25 aus Elastomer, z.B. Silikongummi ausgeführt ist.

Eine Pipetiervorrichtung mit einem solchen Pipetierkopf 20 kann auf verschiedene Weisen durch die Bestückung mit Pipettenspitzen 30.1, 30.2 komplettiert werden.

Ebenso wie im ersten Ausführungsbeispiel für einen Pipetierkopf 20 könnte ein erstes Magazin 40.1, teilweise befüllt mit 39 kleineren Pipettenspitzen 30.1 oder ein zweites Magazin 40.2 teilweise befüllt mit 19 größeren Pipettenspitzen 30.2, in einer Anordnung gleich der der Pipetierkanäle 24.1, 24.2 an den Pipetierkopf 20 angedrückt fixiert werden.

Eine solche Lösung wäre für die Gruppe der größeren Pipetierkanäle 24.2 jedoch nicht sinnvoll, da es zu dem Anordnungsmuster dieser Gruppe weder passende Mikrotiterplatten 18 oder ähnliche Gefäße gibt, noch die Nutzung von neu zu schaffenden entsprechenden Mikrotiterplatten 18 oder ähnlichen Gefäßen irgendeinen Vorteil bringen würde, sondern im Gegenteil sogar einen höheren Platzbedarf hätte.

Hier kommt die zweite erfindungswesentliche Idee zum tragen, die darin besteht die Pipetierspitzen 30.1, 30.2 nicht unmittelbar am Pipetierkopf 20 zu fixieren, sondern mittelbar über eine Adapterplatte 50.1, 50.2, welche die Anordnungsmuster der Gruppen von Pipetierkanälen 24.1, 24.2 auf ein Raster oder einen Teil eines Rasters einer standardisierten Mikrotiterplatte 18 anpasst. Damit können Anordnungsmuster von Gruppen großer Pipetierkanäle 24.2, an die Raster von standardisierten Mikrotiterplatten 18, auch mit sehr kleinen Rasterabständen, adaptiert werden.

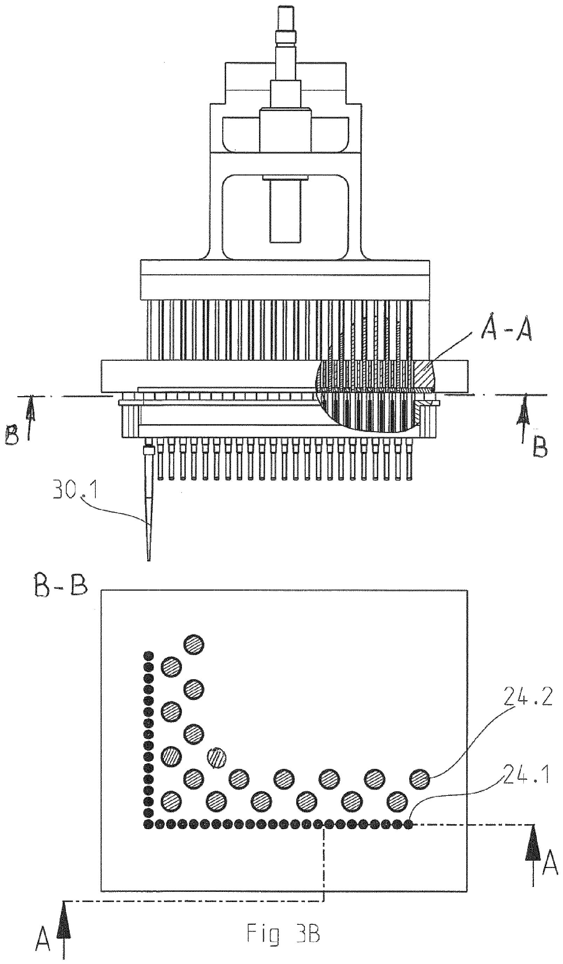

Für einen Pipetierkopf 20 gemäß dem zweiten Ausführungsbeispiel soll nachfolgend eine damit ausgestattete Pipetiervorrichtung beschrieben werden, bei der die beiden Gruppen von Pipetierkanälen 24.1, 24.2 über eine Adapterplatte 50.1, 50.2 mit Pipettenspitzen 30.1, 30.2 verbunden werden, wie es in **Fig. 3B** gezeigt ist.

Grundsätzlich besteht eine solche Adapterplatte 50.1, 50.2 aus einer Anzahl von durch die Adapterplatte 50.1, 50.2 geführte Kanäle, gleich der Anzahl der Pipetierkanäle 24.1, 24.2 der zu adaptierenden Gruppe von Pipetierkanälen. Die Kanaleingänge weisen ein gleiches Anordnungsmuster auf wie die Gruppe der zu adaptierenden Pipetierkanäle 24.1, 24.2, während die Kanalausgänge ein Raster aufweisen, welches einem Teil des Rasters einer standardisierten Mikrotiterplatte 18 entspricht.

Die Adapterplatte 50.1, 50.2 kann sowohl gegenüber den Pipetierkanälen 24.1, 24.2 als auch gegenüber den Pipettenspitzen 30.1, 30.2 über stirnseitig anliegende Dichtringe, eine Dichtplatte oder wie hier dargestellt über an der Adapterplatte ausgebildete Dichtschäfte 51.1, 51.2 abgedichtet sein.

Die Abdichtung gegenüber den Pipettenspitzen 30.1, 30.2 kann, wie ebenfalls bekannt, erfolgen, indem die Pipettenspitzen 30.1, 30.2 mittelbar oder unmittelbar auf an den Kanalauslässen ausgebildete Konen geschoben werden.

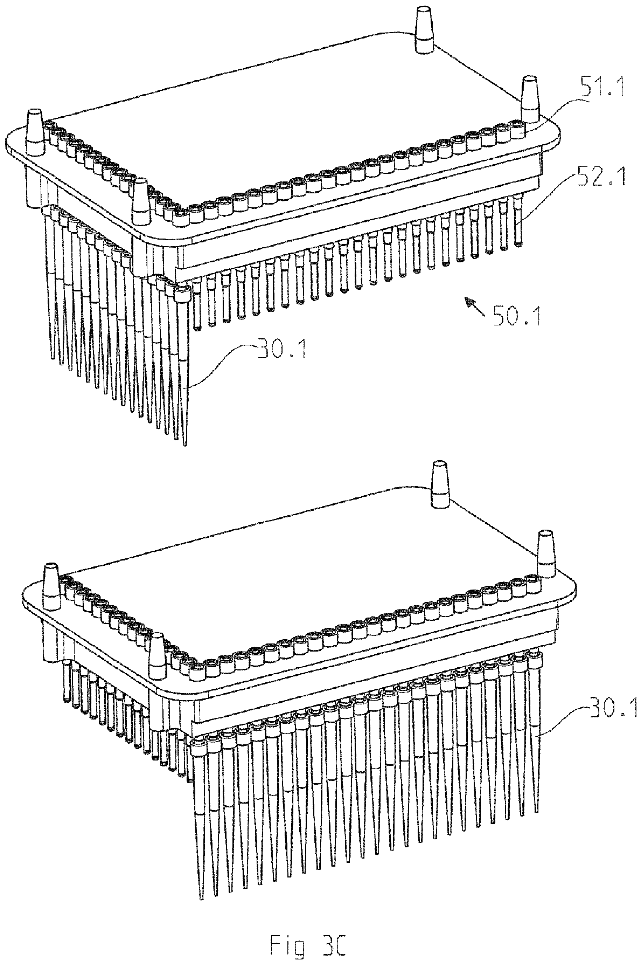

Im vorliegenden Beispiel weist eine erste Adapterplatte 50.1 für die Gruppe von kleineren Pipetierkanälen 24.1, dargestellt in **Fig. 3C****,** genau 39 "L"-förmig, ein Lochmuster bildende Kanaleingänge und entsprechend 39 erste Aufnahmeschäfte 52.1 auf.

Die erste Adapterplatte 50.1 ist mit den 39 Kanaleingängen gegen die Dichtplatte 25 abgedichtet. Je nach Anwendung können nun z. B. 16 kleinere Pipettenspitzen 30.1 auf die ersten Aufnahmeschäfte 52.1 aufgezogen werden, so dass die Pipetiervorrichtung in Längs-/Zeilenrichtung (landscape format) Pipetier-/Dispensiervorgänge (incl. Mischen, Serial Dilution, Direct Dilution ect.) durchführen kann. Wird die erste Adapterplatte 50.1 mit nur 24 kleineren Pipettenspitzen 30.1 in Spaltenrichtung bestückt, so kann analog jedoch rechtwinklig hierzu gearbeitet werden. Natürlich ist es auch möglich mit einer geringeren Anzahl von kleineren Pipettenspitzen 30.1, beispielsweise mit jeder zweiten, vierten oder gar nur einer einzigen kleineren Pipettenspitze 30.1 zu arbeiten. Hierdurch wird es möglich verschiedene Pipetiermuster zu erzeugen oder einzelne Wells, sogenannte single-Wells zu adressieren.

Das auch in Verbindung mit der Verwendung der kleineren Pipettenspitzen 30.1 eine erste Adapterplatte 50.1 verwendet wird, dient auch dazu, dass die Pipetiervorrichtung, unabhängig davon welche der Pipettenspitzen 30.1, 30.2 verwendet werden, gegenüber einer Mikrotiterplatte 18 in z-Richtung zu bedienen ist.

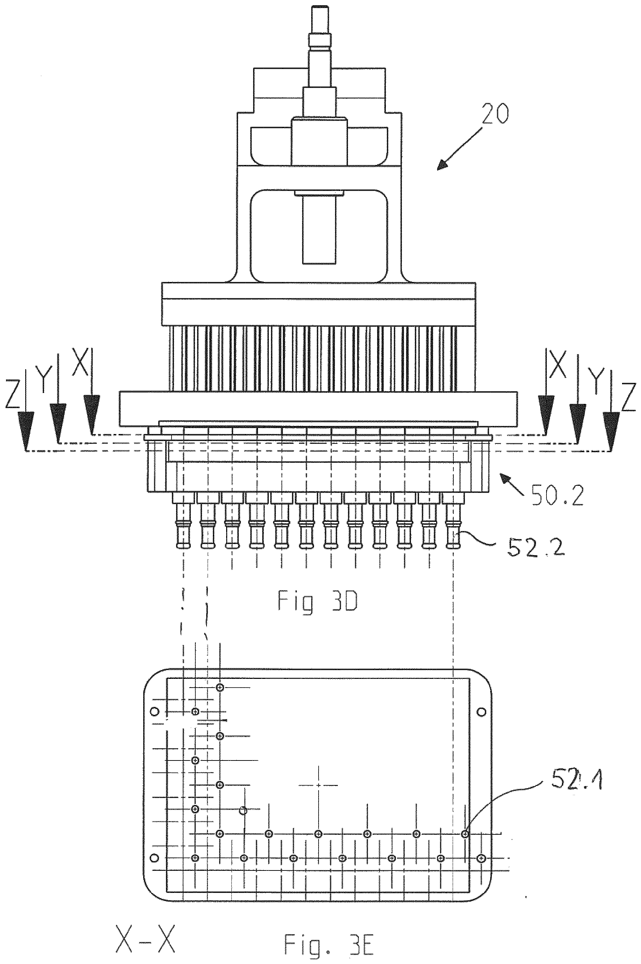

Eine zweite Adapterplatte 50.2 für die Gruppe von größeren Pipetierkanälen 24.2, dargestellt in **Fig. 3D und 3E** weist Kanäle auf, deren Kanaleingänge entsprechend dem Anordnungsmuster der Gruppe der größeren Pipetierkanäle 24.2 angeordnet sind und die ausgangseitig ebenfalls eine "L"-förmige Anordnung von zweiten Aufnahmeschäften 52.2 aufweist, diesmal im doppelten Rasterabstand einer 96er Mikrotiterplatte 18.

Im Unterschied zu den Kanälen der zuvor beschriebenen ersten Adapterplatte 50.1 liegen die Kanalein- und -ausgänge einer zweiten Adapterplatte 50.2 für die Gruppe der größeren Pipetierkanäle 24.2 nicht auf einer Geraden die senkrecht auf der zweiten Adapterplatte 50.2 steht, womit die Kanäle nicht senkrecht durch die Adapterplatte 50.2 geführt werden.

Damit ist es möglich die 19 zweiten Aufnahmeschäfte 52.2 angepasst an das Raster von 96er-Mikrotiterplatten 18 mit einem Rasterabstand von 9 mm ebenso marginal anzuordnen, dass die aufgezogenen größeren Pipettenspitzen 30.2 die Mitte der Mikroplattenwells ohne zusätzliche off-set- Bewegung der Pipetiervorrichtung treffen.

Der Aufbau der zweiten Adapterplatte 50.2 für die Gruppe der größeren Pipetierkanäle 24.2 ist in den **Fig. 3D - 3H** gezeigt.

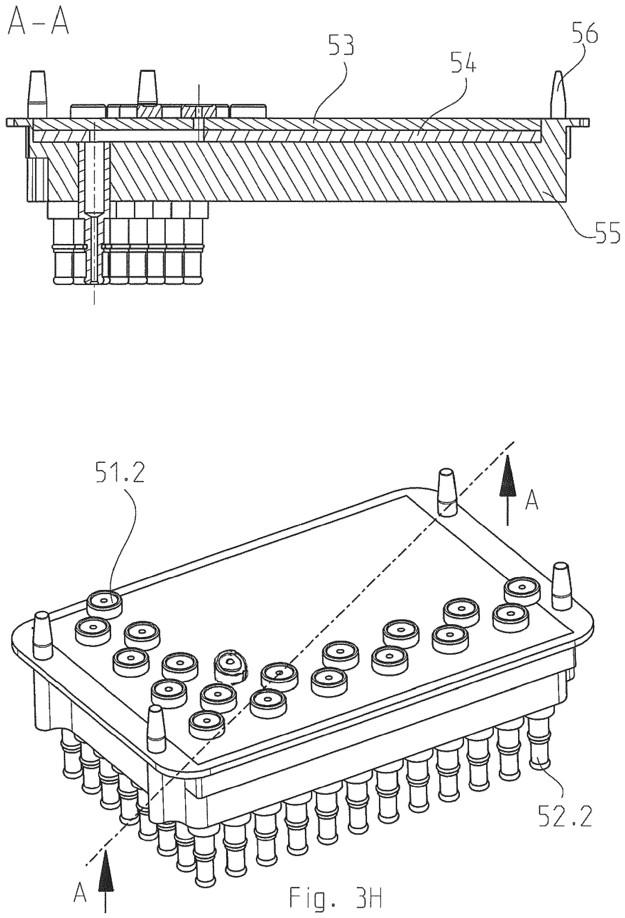

In **Fig. 3D** ist die Pipetiervorrichtung gemäß dem zweiten Ausführungsbeispiel mit einer zweiten Adapterplatte 50.2 für die größeren Pipetierspitzen 30.2, jedoch ohne die Pipetierspitzen 30.2 in Seitenansicht und Ansicht von unten gezeigt. Schnittbilder durch verschiedene Ebenen der zweiten Adapterplatte 50.2 sind in den **Fig. 3E - 3G** dargestellt. Eine perspektivische Ansicht, sowie ein weiteres Schnittbild sind in **Fig. 3H** zu sehen.

Die zweite Adapterplatte 50.2 ist aus drei Einzelplatten 53, 54, 55 gebildet. Der Verlauf der Kanäle wird insbesondere anhand von **Fig. 3H****,** Schnitt A-A an einem Kanal deutlich dargestellt. Durch eine obere Einzelplatte 53 ist ausgehend vom Kanaleinlass ein senkrecht in die zweite Adapterplatte 50.2 verlaufendes Kanalstück geführt. Dieses mündet in ein hierzu senkrecht in einer mittleren Einzelplatte 54 verlaufendes Kanalstück, dessen Breite durch die Dicke der mittleren Einzelplatte 54 bestimmt ist, welches wiederum in ein durch eine untere Einzelplatte 55 senkrecht aus der Adapterplatte führendes Kanalstück mündet. Wie in **Fig. 3F** zu sehen, welche einen Schnitt durch die mittlere Einzelplatte 54 zeigt, haben die Kanalstücke unterschiedliche Längen und unterschiedliche Richtungen. Bei der Vorgabe eines Anordnungsmusters für die Gruppe der größeren Pipetierkanäle 24.2 muss darauf geachtet werden, dass sich die Kanalstücke in der mittleren Einzelplatte 54 nicht überschneiden und das gleiche Luftvolumen bilden. Kanalstücke unterschiedlicher Länge werden entsprechend mit einem Querschnitt unterschiedlicher Größe ausgeführt. Dabei sollen die Kanäle so ausgeführt werden, dass sie ein möglichst kleines Kanalvolumen haben, um ein möglichst nur kleines Luftpolster zu bilden.

Die zum Beispiel aus **Fig. 3H** ersichtlichen Passstifte 56 dienen einer auf die Pipetierkanäle 24.1, 24.2 ausgerichtete, justagefreien automatisierten Aufnahme der Adapterplatte 50.2, wie sie z. B. in der noch nicht veröffentlichten DE 20 2011 000 837 beschrieben ist.

Weitere nicht erläuterte Ausführungsbeispiele für Pipetierköpfe 20 können sich gegenüber den beiden hier beschriebenen Ausführungsbeispielen z. B. dadurch unterscheiden, dass weitere Gruppen von Pipetierkanälen 24.1, 24.2 vorhanden sind oder einzelne Kanäle in einer Adapterplatte zusammengeführt werden, womit das handhabbare Volumen pro Pipettenspitze noch einmal vergrößert werden kann.

Es können sowohl mehrere kleinere Pipetierkanäle 24.1 als auch kleinere und größere oder nur mehrere größere Pipetierkanäle 24.2 zusammengeführt werden.

Es liegt auf der Hand, dass die beschriebenen Beispiele für die Anordnungsmuster für Pipetierkanäle nicht daran gebunden sind ob sie hier für die größeren Pipetierkanäle 24.1 oder die kleinern Pipetierkanäle beschrieben wurden, sondern austauschbar sind.

Die beschriebene Pipetiervorrichtung adaptiert die üblichen Verbindungstechniken von Pipettenspitzen und Pipetierkanälen, nämlich über Kraft/Formschluss an Aufnahmekonen bzw. Aufnahmeschäfte und reinen Kraftschluss an Dichtringen bzw. Dichtplatten und vermittelt somit zwischen diesen beiden Technologien. Durch den Austausch unterschiedlicher Adapterplatten, bestückt mit Pipettenspitzen unterschiedlicher Größe, die jeweils mit Pipetierkanälen unterschiedlicher Größe verbunden werden, ist das Handling bislang nicht erreichter Volumenbereiche möglich. Dies wird dadurch möglich, dass die Anordnung von Pipetierkanälen in einem Raster ungleich der Raster von standardisierten Mikrotiterplatten 18 mit deutlich größeren Rasterabständen möglich ist, was wesentlich größere Durchmesserunterschiede der Pipetierkanäle ermöglicht.

Eine vorteilhafte Ausgestaltung einer Pipetiervorrichtung mit einem Pipetierkopf 20 gemäß dem zweiten Ausführungsbeispiel ist durch die Ergänzung mit einer Abwurfmechanik möglich.

Hierfür ist zwischen die Adapterplatte 50.1, 50.2 und die Pipettenspitzen 30.1, 30.2 eine die Aufnahmeschäfte 52.1, 52.2 umschließende Pipettenspitzenabwurfmechanik in Form von Abstreiferblechen angeordnet. Am Einfachsten ist hierbei ein Federblech mit Löchern so angeordnet, dass es flach an der Adapterplatte 50.1, 50.2 anliegend positioniert ist. Dieses Federblech kann beispielsweise über zwei einfache mechanische Anordnungen zum Spitzenabwurf genutzt werden.

Sofern die Pipetiervorrichtung wenigstens vertikal bewegt wird, kann mittels einer einfachen Klinke die das Federblech zurückhält der Abwurf der Pipettenspitzen 30.1, 30.2 erfolgen. Eleganter, aber eine zusätzliche Baugruppe erfordernd, erfolgt der Spitzenabwurf mit einer in der Pipetiervorrichtung zusätzlich vorgesehenen Schubstange die gegen das Federblech drückt. Diese wiederum kann z. B. über einen Kurbelantrieb oder ähnliches motorisch angetrieben werden. Natürlich ist es auch möglich den Abwurfmechanismus konstruktiv wie in der DE 100 22 693 der Anmelderin zu gestalten.

Eine weitere vorteilhafte Ausgestaltung erfindungsgemäßer Pipetiervorrichtungen besteht darin, zur eindeutigen, automatischen Identifikation der Magazine, Adapterplatten und eventuell auch der Pipettenspitzen, diese mit Identifikatoren zu versehen und das Auslesen dieser Identifikatoren in die Gerätesteuerung einzubeziehen. Hierfür steht eine Vielzahl von Möglichkeiten zu Verfügung:
- mechanische Kodierung der Magazine und Adapterplatten in Kombination mit mechanischen, elektrischen oder optischen Tastern
- elektronische Kodierung mittels eines, beispielsweise seriell auslesbaren, Speicherchips (ROM - read only memory) in Verbindung mit einer elektrischen Kontaktierung zwischen Pipetierkopf und Magazin bzw. Adapterplatten
- RFID-Chip in der Adapterplatte/Magazin und entsprechende Technik im Pipetierkopf bzw. übergeordneten Steuersystem
- Andere Systeme wie Barcode, Matrixcode, Farbcode etc.
- Zusätzlich oder alternativ ist es natürlich auch möglich mittels preiswerter Minibildverarbeitungskameras Merkmale wie Formfaktoren der Pipettenspitzen oder anderer hilfsweise genutzter Kennzeichnungen zu lesen.

Als Schutz vor Verschmutzung der Pipetierkanäle in Folge von Fehlbedienung können in die Aufnahmeschäfte Schutzfilter eingesetzt werden. Oftmals werden auf ein und dem gleichen Aufnahmeschaft Pipettenspitzen verschiedener Größen aufgezogen. Dies hat den Vorteil, dass kleinere Volumina mit besserer Präzision und Richtigkeit pipetiert/dispensiert werden können. Der Verringerung des sogenannten Totvolumens des gesamten Liquid Handling Kanals steht die Gefahr der Überfüllung der Pipettenspitze und der damit einhergehenden Kontamination des Pipetierkanals bzw. dessen Zerstörung durch Verschmutzung gegenüber.

Es ist deshalb vorgesehen in jedem Aufnahmeschaft einen porösen Schutzfilter, z. B. aus gesintertem Polyethylen, auswechselbar zu integrieren. Derartige Schutzfilter sind als Aerosolfilter bzw. Aufsaugschutz in Pipettenspitzen bekannt.

### Bezugszeichenliste

- 11: Basisplatte
- 12: Seitenwand
- 13: erste Führungsschiene
- 14: zweite Führungsschiene
- 15: oberer Transportwagen
- 16: unterer Transportwagen
- 17: Halter
- 18: Mikrotiterplatte
- 20: Pipetierkopf
- 21: Trägerplatte

- 22.1: Kolben mit kleinerem Durchmesser
- 22.2: Kolben mit größerem Durchmesser

- 23.1: Zylinder mit kleinerem Durchmesser
- 23.2: Zylinder mit größerem Durchmesser

- 24.1: Pipetierkanal mit kleinerem Durchmesser
- 24.2: Pipetierkanal mit größerem Durchmesser

- 25: Dichtplatte

- 30.1: kleinere Pipettenspitze
- 30.2: größere Pipettenspitze

- 40.1: erstes Magazin
- 40.2: zweites Magazin

- 50.1: erste Adapterplatte
- 50.2: zweite Adapterplatte

- 51.1: erste Dichtschäfte
- 51.2: zweite Dichtschäfte

- 52.1: erste Aufnahmeschäfte
- 52.2: zweite Aufnahmeschäfte

- 53: obere Einzelplatte
- 54: mittlere Einzelplatte
- 55: untere Einzelplatte
- 56: Passstifte

## Patentansprüche

1. Pipetiervorrichtung mit einem Pipetierkopf (20) mit einer Vielzahl von Pipetierkanälen (24.1), (24.2), wobei die Pipetierkanäle (24.1), (24.2) jeweils von einem Kolben (22.1), (22.2) und einem Zylinder (23.1), (23.2) gebildet sind und wobei eine Gruppe von kleineren Pipetierkanälen (24.1) und eine Gruppe von größeren Pipetierkanälen (24.2), die einen unterschiedlichen Durchmesser aufweisen, vorhanden sind, die jeweils in einem Anordnungsmuster im Pipetierkopf (20) angeordnet sind, sowie mit größeren Pipetierspitzen (30.2), die mit den größeren Pipetierkanälen (24.2) über eine Adapterplatte (50.1) in Verbindung stehen, oder mit kleineren Pipetierspitzen (30.1), die mit den kleineren Pipetierkanälen (24.1) über eine Adapterplatte (50.2) in Verbindung stehen, wobei die Adapterplatten (50.1), (50.2) jeweils eine Anzahl von durch die Adapterplatten (50.1), (50.2) geführten Kanälen aufweisen, gleich der Anzahl der Pipetierkanäle (24.1), (24.2) der zu adaptierenden Gruppe von Pipetierkanälen (24.1), (24.2), mit Kanaleinlässen, die in einem Muster gleich dem Anordnungsmuster der zu adaptierenden Gruppe von Pipetierkanälen (24.1), (24.2) angeordnet sind, und mit Kanalauslässen, die einem Muster angeordnet sind, gleich dem Raster oder einem Teil eines Rasters einer standardisierten Mikrotiterplatte (18).

2. Pipetiervorrichtung nach Anspruch 1, **dadurch gekennzeichnet, dass** das Anordnungsmuster der Gruppe von kleineren Pipetierkanälen (24.1) dem Teil des Rasters der standardisierten Mikrotiterplatte (18) entspricht und das Anordnungsmuster der Gruppe von größeren Pipetierkanälen (24.2) weder dem Raster noch dem Teil des Rasters einer standardisierten Mikrotiterplatte (18) entspricht.

3. Pipetiervorrichtung nach Anspruch 2, **dadurch gekennzeichnet, dass** die Gruppe von kleineren Pipetierkanälen (24.1) L-förmig angeordnet ist und die Gruppe von größeren Pipetierkanälen (24.2) innerhalb der durch die beiden Schenkel des gebildeten L aufgespannten Fläche angeordnet ist.

## Claims

1. A pipetting device, comprising a pipetting head (20) with a plurality of pipetting channels (24.1), (24.2), wherein the pipetting channels (24.1), (24.2) are each formed by a piston (22.1), (22.2) and a cylinder (23.1), (23.2), and wherein a group of smaller pipetting channels (24.1) and a group of larger pipetting channels (24.2), each differing in diameter, are present, each of said groups being arranged in a respective arrangement pattern in the pipetting head (20), said pipetting device also comprising larger pipetting tips (30.2), which are connected with the larger pipetting channels (24.2) via an adaptor plate (50.1), or comprising smaller pipetting tips (30.1), which are connected with the smaller pipetting channels (24.1) via an adaptor plate (50.2), said adaptor plates (50.1), (50.2) each having a number of channels passing through said adaptor plates (50.1), (50.2) that equals the number of pipetting channels (24.1), (24.2) of the group of pipetting channels (24.1), (24.2) to be adapted, with channel inlets, which are arranged in a pattern equal to the arrangement pattern of the group of pipetting channels (24.1), (24.2) to be adapted, and with channel outlets, which are arranged in a pattern equal to the grid or to a part of a grid of a standardised microtiter plate (18).

2. The pipetting device according to claim 1, **characterised in that** the arrangement pattern of the group of smaller pipetting channels (24.1) corresponds to said part of the grid of the standardised microtiter plate (18) and the arrangement pattern of the group of larger pipetting channels (24.2) corresponds to neither the grid nor said part of the grid of a standardised microtiter plate (18).

3. The pipetting device according to claim 2, **characterised in that** the group of smaller pipetting channels (24.1) is arranged in an L shape and the group of larger pipetting channels (24.2) is arranged within the surface defined by both arms of the L shape.

## Revendications

1. Dispositif de pipetage, comportant une tête de pipetage (20) avec une pluralité de canaux de pipetage (24.1), (24.2), chacun des canaux de pipetage (24.1), (24.2) étant constitué par un piston (22.1), (22.2) et un cylindre (23.1), (23.2), et un groupe des canaux de pipetage mineurs (24.1) et un groupe de canaux de pipetage majeurs (24.2) de diamètres différentes étant présents, lesdits groupes étant chacun disposés dans un motif d'arrangement respectif dans la tête de pipetage (20), ledit dispositif de pipetage comportant en plus des pointes de pipetage majeures (30.2), qui sont reliées avec les canaux de pipetage majeurs (24.2) par une plaque adaptrice (50.1), ou comportant des pointes de pipetage mineures (30.1), qui sont reliées avec les canaux de pipetage mineurs (24.1) par une plaque adaptrice (50.2), chacune desdites plaques adaptrices (50.1), (50.2) présentant un nombre de canaux traversant les plaques adaptrices (50.1), (50.2), ledit nombre étant égal au nombre de canaux de pipetage (24.1), (24.2) du groupe de canaux de pipetage (24.1), (24.2) à adapter, avec des entrées de canal qui sont disposées dans un motif correspondant au motif d'arrangement du groupe de canaux de pipetage (24.1), (24.2) à adapter, et avec des sorties de canal qui sont disposées dans un motif correspondant à la grille ou à une partie d'une grille d'une plaque de microtitrage standardisée (18).

2. Dispositif de pipetage selon la revendication 1, **caractérisé en ce que** le motif d'arrangement du groupe de canaux de pipetage mineurs (24.1) correspond à ladite partie de la grille de la plaque de microtitrage standardisée (18) et le motif d'arrangement du groupe de canaux de pipetage majeurs (24.2) ne correspond ni à la grille, ni à ladite partie de la grille de la plaque de microtitrage standardisée (18).

3. Dispositif de pipetage selon la revendication 2, **caractérisé en ce que** le groupe de canaux de pipetage mineurs (24.1) est disposé sous forme d'un L et le groupe de canaux de pipetage majeurs (24.2) est disposé dans la surface définie par les deux bras dudit L.
